# EUROPEAN PATENT SPECIFICATION

(11) **EP 1 356 725 B1**
(45) Date of publication and mention of the grant of the patent: **20.09.2006**
(21) Application number: 03075339.6
(22) Date of filing: 05.02.2003
(51) Int. Cl.: A01K 7/02, A01K 5/02, A23K 1/16

(54) **Device controlled by a feedcomputer, for adding liquid automatically to feed**
Computergesteuerte Vorrichtung zur automatischen Zugabe von Flüssigkeit zu Futter
Dispositif commandé par ordinateur pour l'adjonction automatique de substances liquides à l'alimentation

(30) Priority: 18.02.2002 NL 1020001
(43) Date of publication of application: 29.10.2003
(73) Proprietor: Hanskamp, Hendrik Jan, 7021 KK Zelhem (NL)
(72) Inventor: Hanskamp, Hendrik Jan, 7021 KK Zelhem (NL)

(56) References cited:
- WO-A-96/05723
- US-A- 5 401 501
- US-A- 6 012 608

## Description

The invention relates to a metering pump for automatically dosing animals with measured quantities of liquid by means of a feed computer.

This liquid may be: a medicine, feed supplement, water or a mixture of these products.

The appliance consists of an electric motor controlled by the feed computer, the electric motor drives a cylinder. At each stroke of the cylinder, liquid is drawn in and pressed out again, and a spray nozzle then adds the liquid in doses to the feed in the animal's feed trough.

At present, these medicines or supplements are frequently administered by hand. The herdsman first secures the cow, takes the animal's head under one arm and pushes the head backwards. He then uses one hand to place a tube in the animal's mouth, which is attached to a bottle or other container filled with the liquid. Sometimes an injector is used. Lifting the bottle or pressing the piston of the injector causes the liquid to run into the animal's mouth. This method has many disadvantages: the cow finds the process unpleasant and is often uncooperative. This makes the administration extremely troublesome, and not without danger.

Sometimes a considerable quantity of liquid is lost. For all these reasons, the cattle farmer avoids such administration as much as possible.

A second method, also in combination with the feed computer, is to pump liquid by means of a hose pump and to add it to the concentrated feed in doses. The disadvantage of this system is that the pump is only self-priming to a limited extent; and cannot measure exact doses. The liquid is also transferred to the feed trough by means of a line that cannot be closed off, with the result that the liquid keeps dripping and is also added to the ration of a cow that is not allowed to have it. Moreover, the fixed line fitted directly above the feed trough is an obstacle for the cow.

Another disadvantage is that the hose pump mentioned above can only be connected to one make of feed computer and can therefore only be used by a limited number of cattle farmers.

Documents US-A-6012608 and WO-A-9605723 disclose devices for administering or spraying a liquid onto feed.

The object of the invention is to obtain a similar construction that does not have the problems described above. According to the invention, as defined in claim 1, this can be achieved as follows.

The liquid is stored in a storage container, this storage container is connected to a cylinder by a tube, this cylinder is driven by an electric motor, which is in turn switched on and off by the electronics of the feed computer to which it is connected.

An eccentric is placed between the electric motor and the cylinder. During the first half stroke of the eccentric, the plunger in the cylinder moves downwards. A vacuum is created so that liquid is drawn in from the storage container. During the second half stroke, the liquid is pressed out again under pressure. One-way valves are used to ensure that the liquid is pressed through a tube with a special spray nozzle at its end, and sprayed over the feed concentrate in the feed trough from close by.

The one-way valves have a certain opening pressure, which prevents the liquid from flowing to the spray nozzle automatically because of the height difference. The use of a cylinder means that exact doses can be measured and the necessary pressure can be built up to form a jet.

The size of the cylinder determines the stroke volume. Because the exit opening of the spray nozzle is smaller than the diameter of the supply tube, pressure is built up, so that a (straight) jet of liquid is created. This strong jet means that the spray nozzle does not have to be placed directly above the feed (where the animal's head is), but that the liquid can be transferred to the required destination at an angle. As a result, the spray nozzle can be placed out of the cow's reach.

The channel in the spray nozzle has the shape of a U-bend. This means that no liquid can drip from the supply tube, especially as the supply tube is closed off at the top when not in use.

Adjustment of the electronics, and fitting the motor with special wiper contacts, ensures that the eccentric always makes just one entire revolution, so that the cylinder makes one outward and one inward stroke. So one one single stroke is a fixed quantity of liquid. The use of a plunger/cylinder combination means the system requires little maintenance. No components are used that need to be replaced periodically.

The electric motor met axial transmission is driven by the feed computer. The motor makes one rotation, so that the eccentric also makes one rotation, and the plunger in the cylinder makes a forward and backward stroke. This causes volume expansion (liquid is sucked in) and volume contraction (the liquid is pressed out of the cylinder). The liquid is directed in such a way by the one-way valves and that it flows in the required direction through pressure tube to spray nozzle. The liquid is sprayed in a jet through the spray nozzle on to the feed concentrate in the feed trough .

The smaller diameter of opening of the spray nozzle increases the pressure. The U-bend in the spray nozzle, and the one-way valve that keeps the pressure tube sealed when the motor is not running, ensure that the tube does not drip.

## Claims

1. Device to automatically administer a liquid, such as a medicine or nutritional supplement, to animals in measured doses, using a pump driven by an electric motor and controlled by a feed computer, **characterised in that** the construction consists of an eccentric, driven by an electric motor, and linked to a plunger-cylinder with a fixed stroke volume, so that for each revolution of the eccentric the plunger in the cylinder makes one inward and outward stroke, so that liquid in a storage container is drawn in through a suction tube and pressed out again, under pressure and in exact doses, and directed via a pressure tube to a spray nozzle using one-way valves and, then sprayed through the outlet of the spray nozzle, at an angle and from close by, on to a feed concentrate in a feed trough, so that the animal does not come in contact with parts of the construction.

2. Device according to claim 1, **characterised in that** the liquid, when leaving the spray nozzle, is pressed through the outlet, which has a smaller diameter than the pressure tube, so that even more pressure is built up, and in which the spray nozzle is constructed in such a way that the channel in the spray nozzle consists of one or more U-bends that lead into the outlet, achieving a situation in which, when the appliance is not in use and the pressure tube is sealed by a one-way valve only liquid from the outlet is discharged and the rest of the pressure tube remains full, which prevents the appliance from dripping.

## Patentansprüche

1. Einrichtung, um eine Flüssigkeit, wie etwa ein Medikament oder ein Nahrungsergänzung, mit Hilfe einer Pumpe, angetrieben von einem Elektromotor und angesteuert von einem Futtercomputer, automatisch nach Maß an Tiere zu verabreichen, **gekennzeichnet dadurch dass** die Einrichtung aus einem mit einem Elektromotor verbundenen Exzenter besteht, der mit einem Kolben-Zylinder mit einem festen Hubvolumen verbunden ist, wodurch bei jeder Umdrehung des Exzenters der Kolben im Zylinder einen ein- und ausgehenden Hub ausführt, wodurch Flüssigkeit in einem Vorratsgefäß durch einen Ansaugschlauch angezogen wird und unter Druck und exakt dosiert wieder nach außen gepresst und mit Hilfe von Rückschlagventilen über eine Druckleitung zu einem Sprühkopf geleitet wird und durch die Ausströmöffnung des Sprühkopfes aus einem geringen Abstand unter einem Winkel auf Kraftfutter in einem Futtertrog gespritzt wird, wodurch das Tier nicht mit Teilen der Einrichtung in Kontakt kommt.

2. Einrichtung gemäß Schutzanspruch1, **gekennzeichnet dadurch, dass** die Flüssigkeit beim Verlassen des Sprühkopfes durch die Ausströmöffnung gepresst wird, die einen kleineren Durchmesser hat als die Druckleitung, so dass noch mehr Druck aufgebaut wird, und wobei der Sprühkopf in solcher Weise ausgeführt ist, dass der Durchgang im Sprühkopf aus einem oder mehr Schwanenhälsen besteht, die wieder in der Ausströmöffnung enden, wodurch bewerkstelligt wird, dass, wenn die Einrichtung nicht in Gebrauch ist und die Druckleitung durch ein Rückschlagventil abgeschlossen ist, nur Flüssigkeit aus der Ausströmöffnung wegströmt und der Rest der Druckleitung gefüllt bleibt, so dass das Nachtropfen der Einrichtung vermieden wird.

## Revendications

1. Dispositif pour administrer aux animaux automatiquement et sur mesure, un liquide, tel qu'un remède ou un supplément alimentaire, au moyen d'une petite pompe entraînée par un moteur électrique et commandée par un ordinateur d'affouragement, ayant la caractéristique que le dispositif est composé d'un excentrique relié à un moteur électrique et relié à un cylindre à piston ayant une cylindrée fixe, ce qui provoque, à chaque rotation de l'excentrique, une course entrante et sortante du piston dans le cylindre, entraînant par un tuyau d'aspiration l'aspiration d'un liquide se trouvant dans un réservoir d'approvisionnement, qui est ensuite renvoyé à l'extérieur sous pression, exactement dosé et conduit vers l'extérieur au moyen de clapets de non-retour via un tuyau de refoulement vers une tête d'aspersion et injecté sur une petite distance sous un angle par l'ouverture d'écoulement de la tête d'aspersion, sur les aliments concentrés dans une mangeoire, ce qui ne met pas l'animal en contact avec des parties du dispositif.

2. Dispositif selon la revindication 1, ayant la caractéristique que le liquide, en quittant la tête d'aspersion, est pressé par l'ouverture d'écoulement qui a un diamètre plus petit que le tuyau de refoulement, de sorte qu'il sera obtenu encore plus de pression, alors que la tête d'aspersion est conçue de telle manière que le passage dans la tête d'aspersion est composé d'un ou de plusieurs cols de cygne qui débouchent dans l'ouverture d'écoulement ce qui fait que, lorsque le dispositif n'est pas en fonction et que le tuyau de refoulement est fermé par un clapet de non-retour, seul le liquide pourra s'écouler par l'ouverture d'écoulement et que le reste du tuyau de refoulement reste rempli, de sorte qu'il sera évité que le dispositif ne continue à dégoutter.
